# EUROPEAN PATENT APPLICATION

(11) **EP 2 574 524 A2**
(43) Date of publication of application: **03.04.2013**
(21) Application number: 12185360.0
(22) Date of filing: 21.09.2012
(51) Int. Cl.: B62D 5/065

(54) **Power steering system**

(30) Priority: 27.09.2011 JP 2011211290
(71) Applicant: JTEKT CORPORATION, Osaka-shi Osaka 542-8502 (JP)
(72) Inventor: Nakajima, Yoji, Osaka-shi, Osaka 542-8502 (JP)
(74) Representative: Winter, Brandl, Fürniss, Hübner, Röss, Kaiser, Polte - Partnerschaft

(57) **Abstract**

While drive control of an electric motor (24) is being executed in a normal mode, when a duration of a state where a vehicle speed (Vs) is lower than or equal to a threshold (A1), a steering angular velocity (Vh) is lower than or equal to a threshold (B1) and a motor current (Im) is smaller than or equal to a threshold (C1) is longer than or equal to a first predetermined time defined by a threshold (D1), a control mode is changed to a power-saving mode. Thus, a target rotation speed (Vp*) of the electric motor (24) is changed from a first target rotation speed (Vp1*) to a second target rotation speed (Vp2*).

## Description

### BACKGROUND OF THE INVENTION

### 1. Field of the Invention

The invention relates to a power steering system that generates steering assist force with the use of a hydraulic pump driven by an electric motor. 2. Discussion of Background

There is a conventional power steering system that assists an operation of a steering member such as a steering wheel, by supplying hydraulic fluid from a hydraulic pump to a power cylinder coupled to a steering mechanism such as a rack-and-pinion mechanism. In such a power steering system, an electric motor formed of, for example, a three-phase brushless motor may be used as a driving source for the hydraulic pump. In this case, driving electric power that is supplied to the electric motor is controlled such that the electric motor is rotated at a target rotation speed that corresponds to a steering speed of the steering wheel.

Japanese Patent Application Publication No. 06-206572 (JP 06-206572 A) describes a power steering system that determines that a steering operation is not immediately performed and an electric motor is stopped, when a vehicle speed is zero, a steering angular velocity is zero, and a turn signal switch is off.

In the conventional power steering system, if a condition that the vehicle speed is zero, the steering angular velocity is zero, and the turn signal switch is off is satisfied, even when steering torque is applied to a steering member by a driver, for example, when the steering member is operated until a steering angle reaches a maximum steering angle (when the steering member is operated to the fullest extent), the electric motor is stopped. That is, even when steering assist force is required, the electric motor may be stopped.

### SUMMARY OF THE INVENTION

The invention provides a power steering system that makes it possible to achieve power saving and to avoid a situation where an electric motor is stopped or the rotation speed of the electric motor is controlled to a low speed when steering assist force is required.

According to a feature of an example of the invention, when a duration of a state where a vehicle speed is lower than or equal to a first threshold, a steering angular velocity is lower than or equal to a second threshold and a motor current is smaller than or equal to a third threshold is longer than or equal to a first predetermined time, a power-saving process for stopping an electric motor or controlling a rotation speed of the electric motor to a rotation speed that is lower than a rotation speed in normal mode is executed.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a schematic view that shows the schematic configuration of a power steering system according to an embodiment of the invention;
FIG. 2 is a block diagram that shows the electrical configuration of an ECU; and
FIG. 3 is a flowchart that shows operations of a change control unit.

### DETAILED DESCRIPTION OF EMBODIMENTS

Hereinafter, embodiments of the invention will be described with reference to the accompanying drawings.

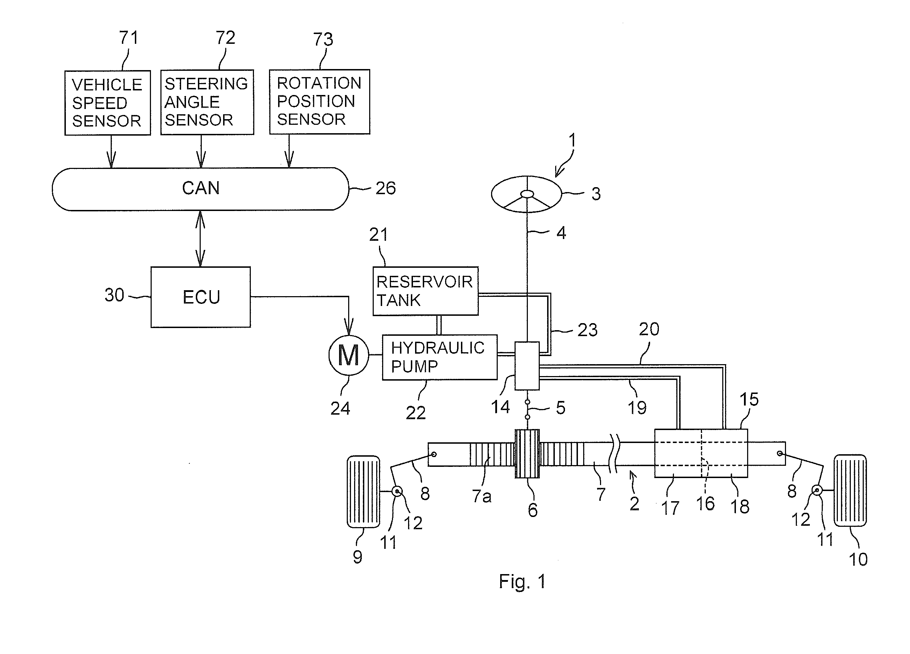

FIG. 1 is a schematic view that shows the schematic configuration of a power steering system according to an embodiment of the invention. The power steering system 1 is provided in association with a steering mechanism 2 of a vehicle, and is used to apply steering assist force to the steering mechanism 2.

The steering mechanism 2 includes a steering wheel 3, a steering shaft 4, a pinion shaft 5, and a rack shaft 7. The steering wheel 3 serves as a steering member that is operated by a driver to steer the vehicle. The steering shaft 4 is coupled to the steering wheel 3. The pinion shaft 5 is coupled to the distal end portion of the steering shaft 4 via a hydraulic control valve 14, and has a pinion gear 6. The rack shaft 7 has a rack gear portion 7a that is in mesh with the pinion gear 6, and serves as a steered shaft that extends in the lateral direction of the vehicle.

Tie rods 8 are coupled to respective ends of the rack shaft 7. The tie rods 8 are coupled to respective knuckle arms 11 that respectively support right and left steered wheels 10, 9. Each knuckle arm 11 is provided so as to be pivotable about a kingpin 12. When the steering wheel 3 is operated and the steering shaft 4 is rotated, the rotation is converted by the pinion gear 6 and the rack gear portion 7a into a linear motion along the axial direction of the rack shaft 7. The linear motion is converted into a pivot motion of each knuckle arm 11 about the corresponding kingpin 12. As a result, the right and left steered wheels 10, 9 are steered.

The hydraulic control valve 14 is a rotary valve, and is formed of a sleeve valve element (not shown) connected to the steering shaft 4, a shaft valve element (not shown) connected to the pinion shaft 5, and a torsion bar (not shown) that couples these valve elements to each other. The torsion bar is twisted in response to the direction and magnitude of steering torque that is applied to the steering wheel 3, and the opening degree of the hydraulic control valve 14 is changed in accordance with the direction and magnitude of torsion of the torsion bar.

The hydraulic control valve 14 is connected to a power cylinder 15 that applies steering assist force to the steering mechanism 2. The power cylinder 15 includes a piston 16 fixed to the rack shaft 7 and a pair of cylinder chambers 17, 18 separated by the piston 16. The cylinder chambers 17, 18 are connected to the hydraulic control valve 14 via oil passages 19, 20, respectively.

The hydraulic control valve 14 is provided on an oil circulating passage 23 that passes through a reservoir tank 21 and a hydraulic pump 22 that generates steering assist force. The hydraulic pump 22 is formed of, for example, a gear pump, and is driven by an electric motor 24. The hydraulic pump 22 draws the hydraulic fluid stored in the reservoir tank 21 and supplies the hydraulic fluid to the hydraulic control valve 14. The excess hydraulic fluid is returned from the hydraulic control valve 14 to the reservoir tank 21 via the oil circulating passage 23.

The electric motor 24 is rotated in one direction to drive the hydraulic pump 22. Specifically, the output shaft of the electric motor 24 is coupled to the input shaft of the hydraulic pump 22. As the output shaft of the electric motor 24 rotates, the input shaft of the hydraulic pump 22 rotates. As a result, the hydraulic pump 22 is driven. When the torsion bar is twisted in one direction, through the hydraulic control valve 14, the hydraulic fluid is supplied to one of the cylinder chambers 17, 18 of the power cylinder 15 via a corresponding one of the oil passages 19, 20, and the hydraulic fluid in the other one of the cylinder chambers is returned to the reservoir tank 21. On the other hand, when the torsion bar is twisted in the other direction, through the hydraulic control valve 14, the hydraulic fluid is supplied to the other one of the cylinder chambers 17, 18 via the other one of the oil passages 19, 20, and the hydraulic fluid in the one of the cylinder chambers is returned to the reservoir tank 21.

When the torsion bar is hardly twisted, the hydraulic control valve 14 is in a balanced state, the steering wheel 3 is in a neutral position, the pressures in the cylinder chambers 17, 18 of the power cylinder 15 are kept equal, and hydraulic fluid circulates through the oil circulating passage 23. When the sleeve valve element and the shaft valve element of the hydraulic control valve 14 rotate relative to each other through a steering operation, the hydraulic fluid is supplied to one of the cylinder chambers 17, 18 of the power cylinder 15, and the piston 16 moves along the vehicle width direction (lateral direction of the vehicle). As a result, steering assist force acts on the rack shaft 7.

The electric motor 24 is formed of a three-phase brushless motor, and is controlled by an electronic control unit (ECU) 30. An in-vehicle LAN (control area network (CAN)) 26 is formed in the vehicle. The above-described ECU 30 is connected to the in-vehicle LAN 26. Further, a vehicle speed sensor 71, a steering angle sensor 72, a rotation position sensor 73 and other sensors are connected to the in-vehicle LAN 26. The vehicle speed sensor 71 is used to detect a speed Vs of the vehicle. The steering angle sensor 72 is used to detect a steering angle θh of the steering wheel 3 that is operated by the driver. The rotation position sensor 73 is used to detect a rotation position of a rotor of the electric motor 24. With the above configuration, the ECU 30 acquires detected signals from the sensors.

The ECU 30 executes drive control over the electric motor 24 on the basis of, for example, the detected signal from the vehicle speed sensor 71, the steering angle sensor 72 and the rotation position sensor 73 such that appropriate steering assist force is applied to the steering mechanism 2.

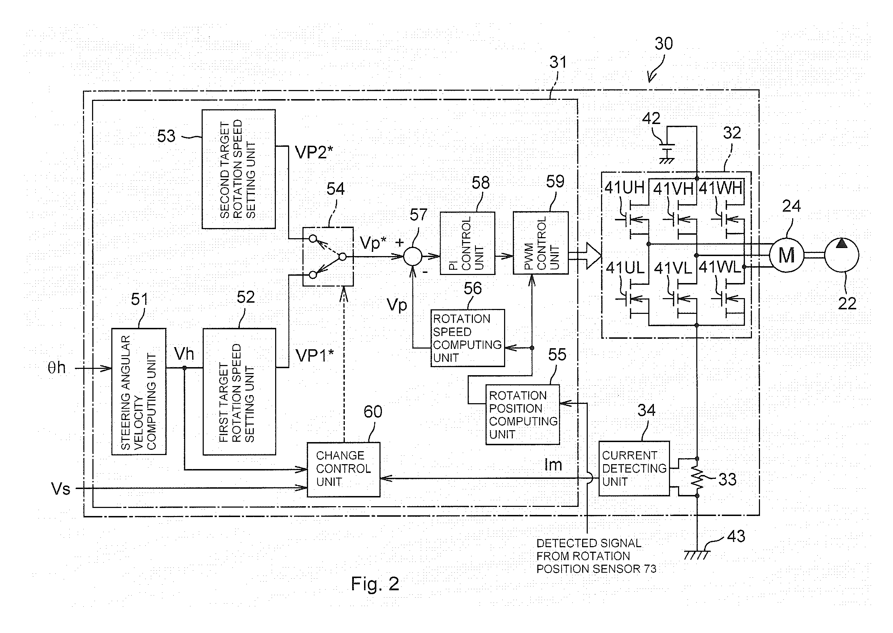

FIG. 2 is a block diagram that shows the electrical configuration of the ECU 30. The ECU 30 includes a microcomputer 31, a driving circuit (inverter circuit) 32, a shunt resistor 33 and a current detecting unit 34. The driving circuit 32 is controlled by the microcomputer 31 and supplies electric power to the electric motor 24. The current detecting unit 34 is used to detect a motor current (consumption current) that flows through the motor 24.

The driving circuit 32 is a three-phase bridge inverter circuit. In the driving circuit 32, a series circuit formed of a pair of field effect transistors (FETs) 41UH, 41UL, which correspond to the U-phase of the electric motor 24, a series circuit formed of a pair of FETs 41 VH, 41 VL, which correspond to the V-phase of the electric motor 24 and a series circuit formed of a pair of FETs 41WH, 41WL, which correspond to the W-phase of the electric motor 24, are connected in parallel with each other between a direct-current power supply 42 and a ground 43.

A U-phase field coil (not shown) of the electric motor 24 is connected to a connection point between the FETs 41UH, 41UL which correspond to the U-phase. A V-phase field coil (not shown) of the electric motor 24 is connected to a connection point between the FETs 41 VH, 41 VL which correspond to the V-phase. A W-phase field coil (not shown) of the electric motor 24 is connected to a connection point between the FETs 41 WH, 41 WL which correspond to the W-phase.

The shunt resistor 33 is connected to a line, at a position between the ground side of the driving circuit 32 and the ground 43. The current detecting unit 34 is used to detect a motor current (consumption current) Im on the basis of an inter-terminal voltage of the shunt resistor 33. The microcomputer 31 includes a CPU and memories (e.g. a ROM, a RAM, a nonvolatile memory), and is configured to function as a plurality of functional processing units by executing predetermined programs. The functional processing units include a steering angular velocity computing unit 51, a first target rotation speed setting unit 52, a second target rotation speed setting unit 53, a target rotation speed changing unit 54, a rotation position computing unit 55, a rotation speed computing unit 56, a speed deviation computing unit 57, a PI control unit 58, a PWM control unit 59, and a change control unit 60.

In the present embodiment, control modes of the electric motor 24 include a normal mode and a power-saving mode. In the power-saving mode, the microcomputer 31 executes a power-saving process for stopping the electric motor 24 or controlling the rotation speed of the electric motor 24 to a speed lower than a rotation speed in the normal mode. Hereinafter, description will be made on a case where, in the power-saving mode, the rotation speed of the electric motor 24 is controlled to a speed lower than the rotation speed in the normal mode.

The steering angular velocity computing unit 51 computes a steering angular velocity Vh by subjecting a value output from the steering angle sensor 72 to temporal differentiation. The first target rotation speed setting unit 52 is used to set a target rotation speed of the electric motor 24 in the normal mode. The first target rotation speed setting unit 52 sets a target rotation speed (hereinafter, referred to as "first target rotation speed Vp1*") of the electric motor 24 on the basis of the steering angular velocity Vh computed by the steering angular velocity computing unit 51. The first target rotation speed setting unit 52 sets the first target rotation speed Vp1* on the basis of, for example, a map that stores the correlation between the steering angular velocity and the first target rotation speed Vp1*. For example, the first target rotation speed Vp1* takes a lower limit value (for example, 2500 rpm) when the steering angular velocity falls within a relatively low first range. The first target rotation speed Vp1* takes an upper limit value (for example, 3500 rpm) when the steering angular velocity falls within a relatively high second range. The first target rotation speed Vp1* is set to increase as the steering angular velocity increases within a range between the lower limit value and the upper limit value, when the steering angular velocity falls within a range between the first range and the second range.

The second target rotation speed setting unit 53 is used to set a target rotation speed (hereinafter, referred to as "second target rotation speed Vp2*") of the electric motor 24 in the power-saving mode. In the present embodiment, the second target rotation speed Vp2* is set to a value lower than the target rotation speed in the normal mode, that is, for example, 1000 rpm. When, in the power-saving mode, the electric motor 24 is not stopped and the target rotation speed is set to a value lower than the target rotation speed in the normal mode, the second target rotation speed Vp2* is preferably set higher than or equal to 1000 rpm. This is because, if the target rotation speed of the electric motor 24 (hydraulic pump 22) is set lower than 1000 rpm, formation of an oil film may be insufficient, which may cause a failure in the hydraulic pump 22.

The target rotation speed changing unit 54 selects one of the first target rotation speed Vp1* set by the first target rotation speed setting unit 52 and the second target rotation speed Vp2* set by the second target rotation speed setting unit 53, and provides the selected target rotation speed to the speed deviation computing unit 57.

The change control unit 60 generates a mode change command for changing the control mode between the normal mode and the power-saving mode on the basis of the vehicle speed Vs detected by the vehicle speed sensor 71, the steering angular velocity Vh computed by the steering angular velocity computing unit 51, and the motor current Im detected by the current detecting unit 34. In response to the mode change command, the control mode is changed in the target rotation speed changing unit 54. In the normal mode, the target rotation speed changing unit 54 selects and outputs the first target rotation speed Vp1* set by the first target rotation speed setting unit 52. On the other hand, in the power-saving mode, the target rotation speed changing unit 54 selects and outputs the second target rotation speed Vp2* set by the second target rotation speed setting unit 53. The details of operations of the change control unit 60 will be described later.

The rotation position computing unit 55 computes a rotor rotation position of the electric motor 24 on the basis of a detected signal from the rotation position sensor 73. The rotation speed computing unit 56 computes a rotation speed (actual rotation speed) Vp of the electric motor 24 on the basis of the rotor rotation position computed by the rotation position computing unit 55. The speed deviation computing unit 57 computes a deviation ΔVp (= Vp* - Vp) between the target rotation speed Vp* selected by the target rotation speed changing unit 54 and the rotation speed Vp of the electric motor 24, which is computed by the rotation speed computing unit 56.

The PI control unit 58 executes PI computation on the speed deviation ΔVp computed by the speed deviation computing unit 57. That is, the speed deviation computing unit 57 and the PI control unit 58 constitute speed feedback control means for bringing the rotation speed Vp of the electric motor 24 to the target rotation speed Vp*. The PI control unit 58 executes PI computation on the speed deviation ΔVp to compute a control voltage value that is a value of voltage that should be applied to the electric motor 24.

The PWM control unit 59 generates a driving signal on the basis of the control voltage value computed by the PI control unit 58 and the rotor rotation position computed by the rotation position computing unit 55, and provides the driving signal to the driving circuit 32. Thus, a voltage based on the control voltage value computed by the PI control unit 58 is applied from the driving circuit 32 to the electric motor 24. That is, when the control mode is the normal mode, drive control of the electric motor 24 is executed such that the rotation speed Vp computed by the rotation speed computing unit 56 becomes equal to the first target rotation speed Vp1* set by the first target rotation speed setting unit 52. On the other hand, when the control mode is the power-saving mode, drive control of the electric motor 24 is executed such that the rotation speed Vp computed by the rotation speed computing unit 56 becomes equal to the second target rotation speed Vp2* set by the second target rotation speed setting unit 53.

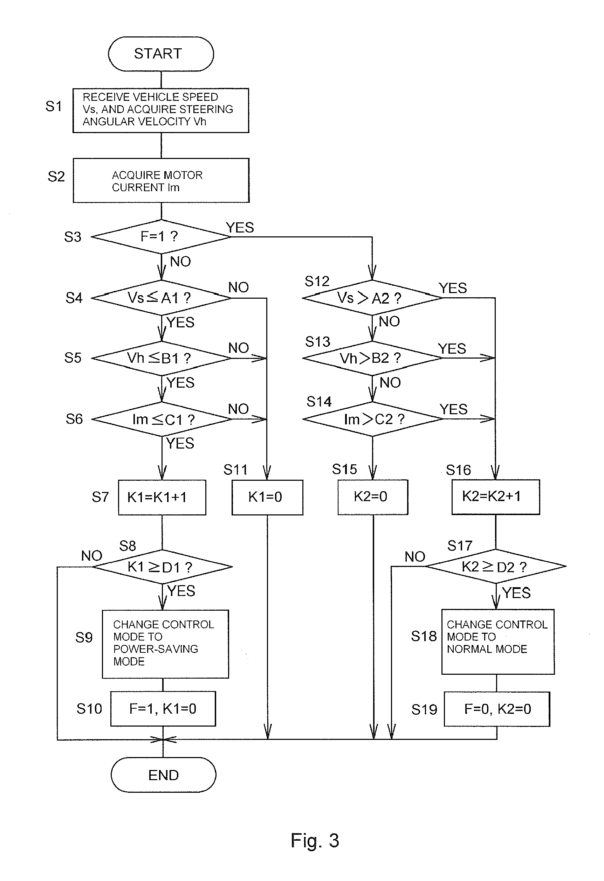

FIG. 3 is a flowchart that shows operations of the change control unit 60. The process of FIG. 3 is repeatedly executed at predetermined computation cycles. The change control unit 60 first receives the vehicle speed V, which is detected by the vehicle speed sensor 71, via the in-vehicle LAN 26, and acquires the steering angular velocity Vh from the steering angular velocity computing unit 51 (step S1). Then, the change control unit 60 acquires the motor current Im from the current detecting unit 34 (step S2).

Subsequently, the change control unit 60 determines whether a mode flag F is set (step S3). The mode flag F is reset (F = 0) when the control mode is the normal mode, and is set (F = 1) when the control mode is the power-saving mode. The mode flag F is reset in an initial state. When the mode flag F is reset (F = 0) (NO in step S3), that is, when the control mode is the normal mode, the change control unit 60 determines whether the vehicle speed Vs is lower than or equal to a predetermined threshold A1 (step S4). The threshold A1 is set to, for example, a value higher than or equal to 0 km/h and lower than or equal to 5 km/h. In the present embodiment, the threshold A1 is set to 1 km/h.

When the vehicle speed Vs is lower than or equal to the threshold A1 (YES in step S4), the change control unit 60 determines whether the steering angular velocity Vh is lower than or equal to a predetermined threshold B1 (step S5). The threshold B1 is set to, for example, a value higher than or equal to 1 degree/sec and lower than or equal to 10 degrees/sec. In the present embodiment, the threshold B1 is set to 10 degrees/sec. When the steering angular velocity Vh is lower than or equal to the threshold B1 (YES in step S5), the change control unit 60 determines whether the motor current Im is smaller than or equal to a predetermined threshold C1 (step S6). The threshold C1 is set to, for example, a value larger than or equal to 5 A and lower than or equal to 10A. In the present embodiment, the threshold C1 is set to 5 A.

When the motor current Im is smaller than or equal to the threshold C1 (YES in step S6), the change control unit 60 increments a first count value K1 by one (+1) (step S7). An initial value of the first count value K1 is zero. Then, the change control unit 60 determines whether the first count value K1 is larger than or equal to a predetermined threshold D1 (step S8). When the first count value K1 is smaller than the threshold D1 (NO in step S8), the change control unit 60 ends the process in the current computation cycle.

When it is determined in step S4 that the vehicle speed Vs is higher than the threshold A1 (NO in step S4), when it is determined in step S5 that the steering angular velocity Vh is higher than the threshold B1 (NO in step S5), or when it is determined in step S6 that the motor current Im is larger than the threshold C1 (NO in step S6), the change control unit 60 resets the first count value K1 to zero (K1 = 0) (step S11). Then, the change control unit 60 ends the process in the current computation cycle.

Therefore, in step S8, it is determined whether the duration of a state where the vehicle speed Vs is lower than or equal to the threshold A1, the steering angular velocity Vh is lower than or equal to the threshold B1 and the motor current Im is smaller than or equal to the threshold C1 is longer than or equal to a first predetermined time defined by the threshold D1. The first predetermined time is set to, for example, 5 sec.

When it is determined in step S8 that the first count value K1 is larger than or equal to the threshold D1 (YES in step S8), the change control unit 60 changes the control mode to the power-saving mode (step S9). Specifically, the change control unit 60 controls the target rotation speed changing unit 54 such that the target rotation speed changing unit 54 selects and outputs the second target rotation speed Vp2*.

After that, the change control unit 60 sets the mode flag F (F = 1), and resets the first count value K1 to zero (K1 = 0) (step S10). Then, the change control unit 60 ends the process in the current computation cycle. When it is determined in step S3 that the mode flag F is set (F = 1) (YES in step S3), that is, when the control mode is the power-saving mode, the change control unit 60 determines whether the vehicle speed Vs is higher than a predetermined threshold A2 (step S12). The threshold A2 is set to a value higher than or equal to the threshold A1. In the present embodiment, the threshold A2 is set to 1 km/h.

When the vehicle speed Vs is lower than or equal to the threshold A2 (NO in step S12), the change control unit 60 determines whether the steering angular velocity Vh is higher than a predetermined threshold B2 (step S13). The threshold B2 is set to a value higher than or equal to the threshold B1. In the present embodiment, the threshold B2 is set to 10 degrees/sec.

When the steering angular velocity Vh is lower than or equal to the threshold B2 (NO in step S13), the change control unit 60 determines whether the motor current Im is larger than a predetermined threshold C2 (step S14). The threshold C2 is set to a value larger than or equal to the threshold C1. In the present embodiment, the threshold C2 is set to 5 A.

When the motor current Im is smaller than or equal to the threshold C2 (NO in step S14), the change control unit 60 resets a second count value K2 to zero (K2 = 0). An initial value of the second count value K2 is zero. Then, the change control unit 60 ends the process in the current computation cycle.

When it is determined in step S12 that the vehicle speed Vs is higher than the threshold A2 (YES in step S12), when it is determined in step S13 that the steering angular velocity Vh is higher than the threshold B2 (YES in step S13) or when it is determined in step S14 that the motor current Im is larger than the threshold C2 (YES in step S14), the change control unit 60 increments the second count value K2 by one (+1) (step S16).

Then, the change control unit 60 determines whether the second count value K2 is larger than or equal to a predetermined value D2 (step S17). That is, it is determined whether the duration of a state where at least one of a condition that the vehicle speed Vs is higher than the threshold A2, a condition that the steering angular velocity Vh is higher than the threshold B2 and a condition that the motor current Im is larger than the threshold C2 is satisfied is longer than or equal to a second predetermined time defined by the threshold D2. The second predetermined time is set to, for example, 0.1 sec.

When the second count value K2 is smaller than the threshold D2 (NO in step S17), the change control unit 60 ends the process in the current computation cycle. When it is determined in step S17 that the second count value K2 is larger than or equal to the threshold D2 (YES in step S17), the change control unit 60 changes the control mode to the normal mode (step S18). Specifically, the change control unit 60 controls the target rotation speed changing unit 54 such that the target rotation speed changing unit 54 selects and outputs the first target rotation speed Vp1*.

After that, the change control unit 60 resets the mode flag F (F = 0), and resets the second count value K2 to zero (K2 = 0) (step S19). Then, the change control unit 60 ends the process in the current computation cycle. Through the above-described operations of the change control unit 60, while drive control of the electric motor 24 is being executed in the normal mode, when the duration of a state where the vehicle speed Vs is lower than or equal to the threshold A1, the steering angular velocity Vh is lower than or equal to the threshold B1 and the motor current Im is smaller than or equal to the threshold C1 is longer than or equal to the first predetermined time defined by the threshold D1, it is determined that that the possibility that a steering operation is performed is low, and the control mode is changed to the power-saving mode. Thus, the target rotation speed Vp* of the electric motor 24 is changed from the first target rotation speed Vp1* to the second target rotation speed Vp2*. As a result, the rotation speed of the electric motor 24 is controlled to be lower than the rotation speed in the normal mode. As a result, power saving is achieved.

Even if the vehicle speed Vs is lower than or equal to the threshold A1 and the steering angular velocity Vh is lower than or equal to the threshold B1, when steering torque is applied to the steering wheel 3 by the driver, for example, when the steering wheel 3 is operated to the fullest extent, the motor current Im is larger than the threshold C1. Therefore, the control mode is not changed to the power-saving mode. Therefore, it is possible to avoid a situation where the control mode is changed to the power-saving mode when steering assist force is required.

When a load on the electric motor 24 is large due to deterioration of the hydraulic pump 22, deterioration of oil, or the like, if the hydraulic pump 22 is stopped, it may be impossible to restart the hydraulic pump 22. In such a case, it is preferable not to change the control mode to the power-saving mode. When a load on the electric motor 24 increases due to deterioration of the hydraulic pump 22, deterioration of oil, or the like, the motor current also increases. In the above-described embodiment, unless the motor current Im is lower than or equal to the threshold C1, the control mode is not changed to the power-saving mode. Therefore, the control mode is not changed to the power-saving mode in the above case.

At low temperatures, the viscosity of oil increases, a load on the electric motor 24 increases, and the motor current increases. In such a case, a warm-up operation is required. In the above-described embodiment, unless the motor current Im is lower than or equal to the threshold C1, the control mode is not changed to the power-saving mode. Therefore, it is possible to avoid a situation where the control mode is changed to the power-saving mode during warm-up operation. Even after a load on the electric motor 24 decreases through warm-up operation and then the motor current Im becomes lower than or equal to the threshold C1, if the warm-up operation is still continued, the control mode is changed to the power-saving mode.

On the other hand, while drive control of the electric motor 24 is executed in the power-saving mode, when the duration of a state where at least one of the condition that the vehicle speed Vs is higher than the threshold A2, the condition that the steering angular velocity Vh is higher than the threshold B2 and the condition that the motor current Im is larger than the threshold C2 is satisfied is longer than or equal to the second predetermined time defined by the threshold D2, it is determined that the possibility that a steering operation is performed is high, and the control mode is changed to the normal mode. Thus, the target rotation speed Vp* of the electric motor 24 is changed from the second target rotation speed Vp2* to the first target rotation speed Vp1*. As a result, it is possible to generate appropriate steering assist force in response to a steering operation.

The embodiment of the invention is described above; however, the invention may be implemented in various other embodiments. For example, in the above-described embodiment, when the control mode is changed from the normal mode to the power-saving mode, the second target rotation speed setting unit 53 sets and outputs the predetermined second target rotation speed Vp2*. Alternatively, a target rotation speed that gradually decreases from the target rotation speed Vp* immediately before the mode change to the second target rotation speed Vp2* may be set and output. Thus, when the control mode is changed from the normal mode to the power-saving mode, it is possible to suppress an abrupt change in the rotation speed of the electric motor 24. Therefore, it is possible to improve steering feeling.

Similarly, in the above-described embodiment, when the control mode is changed from the power-saving mode to the normal mode, the first target rotation speed setting unit 52 sets and outputs the first target rotation speed Vp1* based on the steering angular velocity. Alternatively, a target rotation speed that gradually increases from the target rotation speed Vp* immediately before the mode change to the first target rotation speed Vp1* based on the steering angular velocity may be set and output. Thus, when the control mode is changed from the power-saving mode to the normal mode, it is possible to suppress an abrupt change in the rotation speed of the electric motor 24. Therefore, it is possible to improve steering feeling.

In the above-described embodiment, while drive control of the electric motor 24 is being executed in the power-saving mode, when the duration of a state where at least one of the condition that the vehicle speed Vs is higher than the threshold A2, the condition that the steering angular velocity Vh is higher than the threshold B2 and the condition that the motor current Im is larger than the threshold C2 is satisfied is longer than or equal to the second predetermined time, the control mode is changed to the normal mode. Alternatively, while drive control of the electric motor 24 is being executed in the power-saving mode, when the duration of a state where the vehicle speed Vs is higher than the threshold A2 is longer than or equal to a third predetermined time, when the duration of a where the steering angular velocity Vh is higher than the threshold B2 is longer than or equal to a fourth predetermined time or when the duration of a state where the motor current Im is larger than the threshold C2 is longer than or equal to a fifth predetermined time, the control mode may be changed to the normal mode. The third predetermined time, the fourth predetermined time and the fifth predetermined time may be equal to, for example, the second predetermined time.

In the above-described embodiment, in the power-saving mode, the rotation speed of the electric motor 24 is controlled be lower than the rotation speed during the normal mode. Alternatively, the electric motor 24 may be stopped in the power-saving mode.

In addition, in the above-described embodiment, the motor current (consumption current) is detected on the basis of the inter-terminal voltage of the shunt resistor 33. Alternatively, the motor current (consumption current) may be detected on the basis of at least one of U-phase current, V-phase current and W-phase current. For example, the rotation speed of the electric motor 24 may be regarded as a constant value and the root mean square (rms) of one-phase current may be detected as a consumption current.

## Claims

1. A power steering system that generates steering assist force using a hydraulic pump that is driven by an electric motor, comprising:
vehicle speed detecting means for detecting a vehicle speed;
steering angular velocity detecting means for detecting a steering angular velocity;
current detecting means for detecting a motor current that flows through the electric motor; and
power-saving means for executing a power-saving process for stopping the electric motor or controlling a rotation speed of the electric motor to a rotation speed that is lower than a rotation speed in normal mode, when a duration of a state where the vehicle speed detected by the vehicle speed detecting means is lower than or equal to a first threshold, the steering angular velocity detected by the steering angular velocity detecting means is lower than or equal to a second threshold and the motor current detected by the current detecting means is smaller than or equal to a third threshold is longer than or equal to a first predetermined time.

2. The power steering system according to claim 1, wherein the power-saving means is configured to gradually decrease the rotation speed of the electric motor until the electric motor is stopped or until the rotation speed of the electric motor becomes a predetermined rotation speed, when the power-saving means executes the power-saving process.

3. The power steering system according to claim 1 or 2, further comprising, returning means for returning the rotation speed of the electric motor to the rotation speed in normal mode, when a duration of a state where at least one of a condition that the vehicle speed detected by the vehicle speed detecting means is higher than a fourth threshold, a condition that the steering angular velocity detected by the steering angular velocity detecting means is higher than a fifth threshold and a condition that the motor current detected by the current detecting means is larger than a sixth threshold is satisfied is longer than or equal to a second predetermined time, while the power-saving process is being executed by the power-saving means.

4. The power steering system according to claim 1 or 2, further comprising, returning means for returning the rotation speed of the electric motor to the rotation speed in normal mode, when a duration of a state where the vehicle speed detected by the vehicle speed detecting means is higher than a seventh threshold is longer than or equal to a third predetermined time, when a duration of a state where the steering angular velocity detected by the steering angular velocity detecting means is higher than an eighth threshold is longer than or equal to a fourth predetermined time or when a duration of a state where the motor current detected by the current detecting means is larger than a ninth threshold is longer than or equal to a fifth predetermined time, while the power-saving process is being executed by the power-saving means.

5. The power steering system according to claim 3 or 4, wherein the returning means is configured to gradually increase the rotation speed of the electric motor until the rotation speed of the electric motor becomes the rotation speed in normal mode.

6. The power steering system according to any one of claims 1 to 5, wherein the rotation speed of the electric motor in normal times is controlled based on the steering angular velocity detected by the steering angular velocity detecting means.
